# EUROPÄISCHE PATENTSCHRIFT

(11) **EP 3 180 226 B1**
(45) Veröffentlichungstag und Bekanntmachung des Hinweises auf die Patenterteilung: **11.09.2019**
(21) Anmeldenummer: 15738937.0
(22) Anmeldetag: 21.07.2015
(51) Int. Cl.: B62D 1/16

(54) **LENKSÄULE MIT HYBRID-BAUTEILEN ALS TRAGENDE STRUKTUREN**
STEERING COLUMN WITH HYBRID COMPONENTS AS SUPPORT STRUCTURES
COLONNE DE DIRECTION POURVUE DE COMPOSANTS HYBRIDES SERVANT DE STRUCTURES PORTEUSES

(30) Priorität: 15.08.2014 DE 102014011965
(43) Veröffentlichungstag der Anmeldung: 21.06.2017
(73) Patentinhaber: ThyssenKrupp Presta AG, 9492 Eschen (LI); thyssenkrupp AG, 45143 Essen (DE)
(72) Erfinder: KREUTZ, Daniel, 6800 Feldkirch (AT); REGNER, Sebastian, 88138 Hergensweiler (DE); SCHACHT, Arne, 6800 Feldkirch (AT); FORTE, Sebastian, 9493 Mauren (LI); GALEHR, Robert, 9486 Schaanwald (LI); SCHNITZER, Hieronymus, 9487 Gamprin (LI)
(74) Vertreter: thyssenkrupp Intellectual Property GmbH
(86) Internationale Anmeldenummer: PCT/EP2015/066635
(87) Internationale Veröffentlichungsnummer: WO 2016/023713

(56) Entgegenhaltungen:
- DE-A1-102011 055 357
- DE-A1-102012 007 005
- DE-A1-102012 100 701

## Beschreibung

Die vorliegende Erfindung betrifft eine Lenksäule für ein Kraftfahrzeug mit den Merkmalen des Oberbegriffs des Anspruchs 1.

Lenksäulen für Kraftfahrzeuge sind mehrteilige Baugruppen, bei denen eine Lenkspindel oder Lenkwelle in einer Lagereinheit gelagert ist. Die Lagereinheit selbst ist gegenüber einer Konsole häufig verschwenkbar gelagert, sodass eine Höheneinstellung des Lenkrades möglich ist. Die Konsole selbst ist an der Karosserie des Kraftfahrzeuges mittels einer Halteeinheit befestigt.

Zur Erreichung einer hohen Eigenfrequenz der Lenksäule ist es erforderlich, die Halteeinheit möglichst steif auszuführen. Zu diesem Zweck wird die Halteeinheit herkömmlicherweise aus metallischen Werkstoffen gefertigt. Eine der Grundanforderung im Kraftfahrzeugbau ist jedoch, das Gesamtgewicht des Fahrzeuges niedrig zu halten, wobei auch die in der Lenksäule verwendeten Komponenten ein möglichst geringes Gewicht aufweisen sollten. Die Leichtbauweise mit metallischen Werkstoffen ist durch Mindestwanddicken aufgrund des Herstellungsprozesses und durch Mindestwandstärken zur Vermeidung von Knick- und Beul-Phänomenen limitiert. Kunststoffe bzw. faserverstärkte Kunststoffe haben eine geringere Dichte als metallische Werkstoffe und können mit einer sehr dünnen Wandstärke gefertigt werden.

Aus der DE 10 2011 055 356 A1 ist eine Konsole für eine Lenksäule bekannt, die aus Kunststoff gemischt mit metallischen Elementen im Spritzgussverfahren hergestellt ist.

Die DE 10 2012 200 701 A1 offenbart eine Lenksäule, bei der ein erstes und ein zweites Bauteil aus einem Kunststoff bestehen und diese Bauteile integral miteinander verbunden sind.

Die WO 02/053445 A2 offenbart eine Lenksäule mit einem Metallrahmen, der von einem Kunststoff umformt ist. Der Metallrahmen erstreckt sich dabei über die gesamte Lenksäule.

Die DE 10 2012 000 633 A1 offenbart ein Konsolenelement zur Halterung einer Lenksäule an einer Karosserie eines Kraftfahrzeuges. Das Konsolenelement ist als Hybridbauteil ausgebildet, bestehend aus einem Grundkörper, der mit Kunststoff zu dem Hybridbauteil ergänzt ist. Mit dem Kunststoff wird der Grundkörper mittels eines Spritzgießwerkzeug teilweise angespritzt oder teilweise umspritzt. Der Grundkörper besteht dabei selbst aus Kunststoff bzw. faserverstärktem Kunststoff.

Die DE 10 2012 007 005 A1 offenbart den Oberbegriff des Anspruchs 1 und zeigt eine Lenksäule, welche ein Hybridbauteil aus faserverstärktem Verbundwerkstoff umfasst, welches einen Einleger aufweist, der ein Funktionselement bildet.

Es ist Aufgabe der vorliegenden Erfindung, eine Lenksäule für ein Kraftfahrzeug mit verbesserter Halteeinheit bereitzustellen, wobei die Halteeinheit durch eine geringe Masse, eine hohe Steifigkeit und eine ausreichende Festigkeit über einen großen Temperaturbereich gekennzeichnet ist.

Diese Aufgabe wird von einer Lenksäule für ein Kraftfahrzeug mit den Merkmalen des Anspruchs 1 gelöst.

Danach ist eine Lenksäule für ein Kraftfahrzeug mit einer in einer Manteleinheit drehbar gelagerten Lenkspindel und mit einer die Manteleinheit mittelbar oder unmittelbar umgebenden Halteeinheit, zur Verbindung der Manteleinheit mit dem Kraftfahrzeug verbindet, wobei die Halteeinheit als Hybridbauteil ausgebildet ist und zwei Seitenteile, die wiederum jeweils eine Seitenwange umfassen, und Funktionselemente aufweist, und wobei die Funktionselemente Verbindungsabschnitte zum Fahrzeug oder zur Manteleinheit sind, vorgesehen, bei der das Hybridbauteil wenigstens einen Einleger aufweist, der mit Kunststoff zu dem Hybridbauteil ergänzt ist, wobei der Einleger wenigstens ein Funktionselement bildet, wobei ein Einleger eine Seitenwange ausbildet, der ein Langloch aufweist, und/oder ein Einleger eine Ausnehmung zur Aufnahme einer Schwenkachse bildet, wobei der Einleger einen Befestigungspunkt zur Befestigung an dem Fahrzeug aufweist.

Durch die Einleger wird das Hybridbauteil, das alternativ auch als Verbundbauteil bezeichnet werden kann, in den Bereichen der Funktionselemente verstärkt, so dass das Hybridbauteil trotz seiner geringen Masse eine hohe Steifigkeit und ausreichende Festigkeit in diesen Bereichen aufweist.

In einer bevorzugten Ausführungsform ist die Manteleinheit der Lenksäule um eine Schwenkachse gegenüber der Halteeinheit schwenkbar gelagert und wobei die Aufnahmen der Halteeinheit für die Schwenkachse durch ein oder mehrere der vorgenannten Funktionselemente gebildet sind.

Die Schwenkachse ist bevorzugt senkrecht zur Längsachse der Lenkspindel und in Einbaulage der Lenksäule horizontal ausgerichtet. In einer bevorzugten Ausführungsform ist die Manteleinheit der Lenksäule gegenüber der Halteeinheit verschiebbar ist und wobei Seitenwangen der Halteeinheit angeordnet sind, die jeweils durch eines der vorgenannten Funktionselemente gebildet sind.

In einer bevorzugten Ausführungsform weist die Lenksäule eine Führungsklammer auf, in der die Manteleinheit gegenüber der Halteeinheit verschiebbar geführt ist, wobei die Führungsklammer um eine Schwenkachse gegenüber der Halteeinheit schwenkbar gelagert ist und wobei die Funktionselemente die Aufnahmen der Halteeinheit für die Schwenkachse und die beiden Seitenwangen zumindest teilweise durch vorgenannte Funktionselemente gebildet sind.

Die Verschiebung der Manteleinheit gegenüber der Halteeinheit erfolgt bevorzugt entlang einer Längsachse der Lenkspindel.

Dabei ist es vorteilhaft, wenn eine Höhenverstelleinrichtung mit einem Spannapparat mit Spannbolzen vorgesehen ist, wobei durch Betätigen des Spannapparates die Manteleinheit gegenüber den beiden Seitenwangen der Halteeinheit verspannbar ist, und wobei ein Funktionselement die Aufnahme der Halteeinheit für den Spannbolzen bildet.

Es kann weiterhin vorteilhaft sein, wenn die Seitenwangen der Halteeinheit im Bereich des Spannapparates jeweils ein Langloch für die Höhenverstelleinrichtung aufweisen, wobei ein Funktionselement die Langlöcher aufweist.

Vorzugsweise umfasst ein Funktionselement den Bereich, in dem die Seitenwangen der Halteeinheit eine direkte oder indirekte reibschlüssige Verspannung mit den Seitenflächen der Manteleinheit bilden.

In einer vorteilhaften Ausführungsform ist vorgesehen, dass Befestigungspunkte zur Befestigung der Halteeinheit dem Kraftfahrzeug durch vorgenannte Funktionselemente gebildet sind.

Die Seitenteile sind bevorzugt als Einzelteile gefertigt und mit einer Brücke zu der Halteeinheit verbunden.

Dabei können die Seitenteile mit Einlegern im Spritzguss-Verfahren hergestellt sein.

Der Kunststoff des Hybridbauteils ist vorteilhafterweise mit Fasern verstärkt.

In einer Ausführungsform sind die Einleger aus Metall und in einer anderen Ausführungsform sind die Einleger aus einem anderen Kunststoff als der Rest des Hybrid-Bauteils gefertigt.

Um eine formschlüssigen Verbindung mit dem Kunststoff herzustellen, weisen die Einleger vorzugsweise Löcher auf. Unter Löcher versteht man sämtliche Ausnehmung durch die sich der Kunststoff erstrecken kann.

In einer bevorzugten Ausführungsform sind die Funktionselemente eines Seitenteils durch zwei Einleger gebildet.

Eine bevorzugte Ausführungsform der Erfindung wird nachfolgend anhand der Zeichnungen näher erläutert. Es zeigen:
- Fig. 1:: eine räumliche Ansicht einer Lenksäule mit einer Konsole und einer Halteeinheit,
- Fig. 2:: eine räumliche Darstellung der Halteeinheit aus Fig. 1,
- Fig. 3:: eine räumliche Teilansicht der Halteeinheit, sowie
- Fig. 4:: eine Explosionszeichnung eines Seitenteils der Halteeinheit.

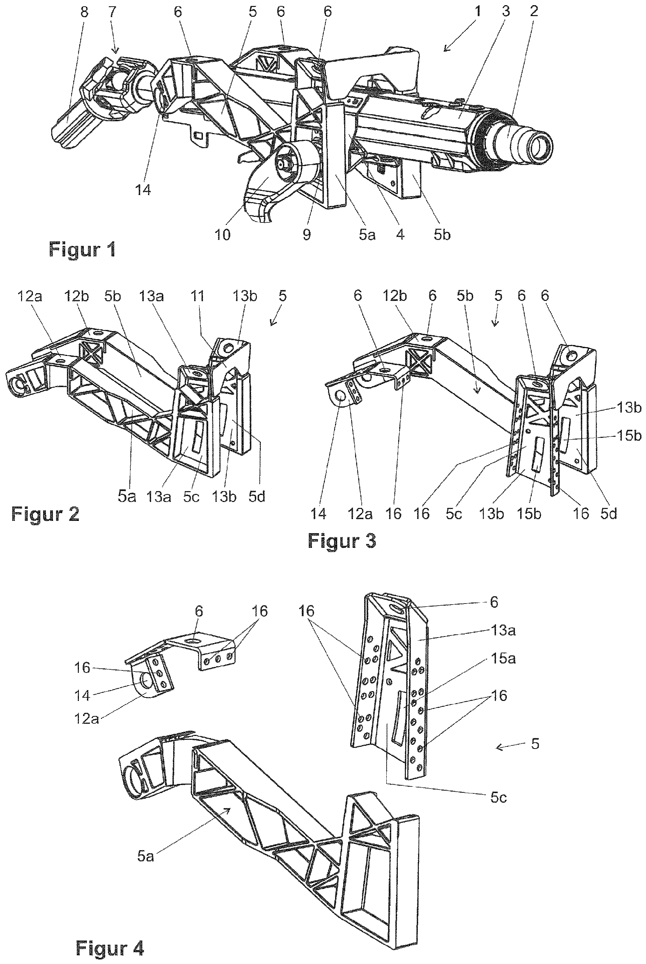

In der Figur 1 ist eine erfindungsgemäße Lenksäule 1 dargestellt. Die Lenksäule 1 umfasst eine Lenkspindel 2, die um ihre Drehachse (Lenkachse) drehbar in einer Manteleinheit 3 gelagert ist. Die Manteleinheit 3 ist in einer Führungsklammer 4 entlang der Längsachse der Lenkspindel 2 verschiebbar geführt. Die Führungsklammer 4 ist um eine Schwenkachse in einer Halteeinheit 5 schwenkbar gelagert. Die Halteeinheit 5 kann in Befestigungspunkten 6 an dem nicht dargestellten Fahrzeug befestigt werden. Die Halteeinheit weist zwei Seitenteile 5a, 5bauf, die an gegenüberliegenden Seiten der Führungsklammer 4 angeordnet sind. Jedes Seitenteil 5a, 5b weist wiederum jeweils eine Seitenwange 5c, 5d auf. Die von einem Fahrer über ein (nicht dargestelltes) Lenkrad in die Lenkspindel 2 eingebrachte Drehbewegung wird über ein Kardangelenk 7 und weitere Lenkwellenteile 8 in das nicht dargestellte Lenkgetriebe eingebracht. Zur Erhöhung des Komforts des Fahrers kann die Lenksäule 1 in ihrer Höhe und in ihrer Länge verstellt werden. Hierzu ist ein Fixiermechanismus 9 vorgesehen, der einen im Stand der Technik bekannten Spannapparat umfasst. Der Spannapparat weist einen Spannbolzen, einen Nockenmechanismus, ein Drucklager und einen Spannhebel 10 auf. Durch Verdrehung des Spannhebels 10 werden die beiden Nocken des Nockenmechanismus gegeneinander verdreht und die Seitenwangen 5c, 5d der Halteeinheit 5 zusammengezogen, wodurch eine reibschlüssige Verspannung der Seitenwangen 5c, 5d mit den Seitenflächen der Führungsklammer 4 und wiederum mit den Seitenflächen der Manteleinheit 3 erfolgt. Die Verspannung kann alternativ auch durch eine elektrisch angesteuerte Spannapparatur erfolgen. Ebenfalls ist es denkbar und möglich, anstatt des Nockenmechanismus eine andere mechanische Spannapparatur, zu verwenden, wie beispielsweise einen Kippstiftmechanismus.

In der Figur 2 ist die erfindungsgemäße Halteeinheit 5 dargestellt. Die Halteeinheit weist die beiden Seitenwangen 5c, 5d und eine die Seitenteile 5a, 5b verbindende Brücke 11 auf. Die Seitenteile 5a, 5b sind als Kunststoff-Metall-Hybrid-Bauteile ausgeformt, wobei es sich um ein Verbundbauteil handelt. Kunststoff-Metall-Hybrid-Bauteile werden im Kunststoff-Spritzguss-Verfahren oder einem anderen urformenden Verfahren für Kunststoffe hergestellt. Die Hybrid-Bauteile weisen Einleger 12a, 12b, 13a, 13b aus Metall auf. Die Einleger werden aus Metall gestanzt und gegebenenfalls umgeformt. Die Einleger 12a, 12b, 13a, 13b können aber auch aus Metall urformend hergestellt werden oder aus anderen Materialien wie beispielsweise Kunststoff und Keramik hergestellt werden.

In der Figur 3 und der Figur 4 sind die Einleger 12a, 12b, 13a, 13b dargestellt. Jedes Seitenteil 5a, 5b weist einen ersten Einleger 12a, 12b und einen zweiten Einleger 13a, 13b auf. Der erste Einleger 12a, 12b bildet bzw. verstärkt eine Ausnehmung 14 zur Aufnahme der Schwenkachse, um die die Führungsklammer 4 gegenüber der Halteeinheit 5 verschwenkbar gelagert ist. Er stellt die Verbindung der Halteeinheit 5 zum Schwenkhebel her. Der Einleger 12a, 12b erstreckt sich entlang der Halteeinheit 5 bis zu einem schwenkachsennahen Befestigungspunkt 6, dessen Ausnehmung er bildet. Die Halteeinheit 5 kann in diesem Befestigungspunkt 6 an dem nicht dargestellten Fahrzeug befestigt werden. Der Einleger 12a, 12b dient somit zum Einen zur Aufnahme der Schraubenkraft am schwenkachsennahen Befestigungspunkt 6 und zum Anderen durch die Erstreckung entlang der Halteeinheit 5 zur Aufnahme der Kraft, die im Falle eines Unfalls auf die Lenksäule 1 wirkt.

Der zweite Einleger 13a, 13b ist im Bereich des Spannapparates auf der Innenseite des Seitenteil 5a, 5b zur Führungsklammer 4 zeigend und in etwa senkrecht zur Lenkachse angeordnet und bildet somit die Seitenwangen 5c, 5d aus. Er nimmt die Klemmkraft auf, die bei der reibschlüssigen Verspannung der Seitenwangen 5c, 5d bzw. der zweiten Einleger 13a, 13b mit den Seitenflächen der Führungsklammer 4 auftritt. Weiterhin weist der zweite Einleger 13a, 13b ein Langloch 15a, 15b auf, das im montierten Zustand von einem Spannbolzen des Spannapparates durchsetzt ist. Das Langloch 15a, 15b dient zur Führung der Höhenverstellung der Lenksäule 1. Außerdem bildet der zweite Einleger 13a, 13b einen zweiten spannapparatnahen Befestigungspunkt 6, der zur Befestigung der Halteeinheit 5 an dem nicht dargestellten Fahrzeug dient. Durch den zweiten Einleger 13a, 13b wird ebenfalls die Festigkeit und Steifigkeit der Halteeinheit 5 erhöht, so dass die Halteeinheit 5 eine vorteilhafte hohe Eigenfrequenz aufweist und im Falle eines Unfalls einen Teil der auftretenden Kraft aufnehmen kann.

Die Einleger 12a, 12b, 13a, 13b werden bei der Herstellung der Seitenteile 5a, 5b beim Kunststoff-Spritzguss-Verfahren in ein Spritzgusswerkzeug eingelegt. Danach wird der verflüssigte Kunststoff unter Druck in das Spritzgusswerkzeug eingespritzt.

Die Verbindungen der Einleger mit dem Kunststoff sind sehr wichtig für die mechanischen Eigenschaften des Bauteils. Dazu sind in den Bereichen in denen die Einleger 12a, 12b, 13a, 13b mit dem Kunststoff bei der Herstellung der Seitenteile 5a, 5b in Verbindung kommen, Löcher 16 im Metall der Einleger 12a, 12b, 13a, 13b vorgesehen. Bei der Herstellung erstreckt sich der Kunststoff durch die Löcher 16, so dass die Einleger 12a, 12b, 13a, 13b mit dem Kunststoff formschlüssig verbunden werden.

Es ist weiterhin denkbar und möglich, die formschlüssige Verbindung von Metall und Kunststoff durch Warmumformen, beispielweise Erwärmen mittels Ultraschall oder Ähnlichem, oder durch Verbindungstechnologien wie beispielsweise Nieten, Schrauben, Blechbiegen oder Ähnlichem herzustellen. Dabei kommen eine nicht begrenzte Vielzahl von Formschlüssen, wie Löcher, Profile beispielsweise Wellen, Haken, Igel oder dergleichen und Umformungen wie beispielsweise Prägen oder Ähnliches in Frage.

Weiterhin können auch stoffschlüssige Verbindungen zwischen Kunststoff und Einleger eingesetzt werden, die auf Adhäsion, beispielsweise Schlichte oder Kleben, oder Kohäsion basieren.

Zudem ist es auch möglich, Verbindungen zweier verschiedener Kunststoffe, wie beispielsweise Glasfaserverstärkter Kunststoff / Kohlenstofffaserverstärkter Kunststoff oder PA/PET, die auf einer Kombination aus Stoff- und Formschluss bestehen, einzusetzen.

Vorzugsweise kommen PET, POM, PA, PEAK, PEEK oder ähnliche Kunststoffe zum Einsatz, die mit Fasern aus Kohlenstoff, Aramid, Glas oder Ähnlichem verstärkt sind.

Damit verschiedene Leichtbauanforderungen mit einem Design erfüllt werden können, beispielsweise in einem Spritzguss-Werkzeug, können Einleger aus unterschiedlichen Materialien eingesetzt werden. Für geringe Leichtbauanforderungen kann Stahl, für mittlere Leichtbauanforderungen kann Aluminium und für hohe Leichtbauanforderungen kann Magnesium für die Herstellung der Einleger verwendet werden. Es sind aber auch Einleger aus Kunststoff oder Keramik möglich.

Die erfindungsgemäße Lenksäule ist ein Hybrid-Bauteil, das Einleger aufweist, die einen Verbindungsabschnitt zum Fahrzeug und einen Verbindungsabschnitt zum Lenksäulenmantel aufweisen. Durch diese Anordnung der Einleger wird die direkte Kraft auf die Halteeinheit durch die Einleger geleitet.

In einer nicht dargestellten Ausführungsform weist zumindest ein der Seitenteile der Halteeinheit ein oder mehrere integral aus dem Kunststoff ausgebildeten Kopplungselement auf, beispielsweise einen Kabelhalter, ein Befestigungsabschnitt für die Lenksäulenverkleidung und/oder eine Anbindungsstruktur für Anbauteile, wie ein Schaltelement oder ein Lenkradschloss.

Die erfindungsgemäße Lenksäule weist eine Halteeinrichtung auf, die eine steife Struktur bei gleichzeitigem geringem Masseneinsatz und eine hohe Festigkeit in einem Temperaturbereich zwischen -40°C bis 80°C aufweist.

## Patentansprüche

1. Lenksäule (1) für ein Kraftfahrzeug mit einer in einer Manteleinheit (3) drehbar gelagerten Lenkspindel (2) und mit einer die Manteleinheit (3) mittelbar oder unmittelbar umgebenden Halteeinheit (5), zur Verbindung der Manteleinheit (3) mit dem Kraftfahrzeug, wobei die Halteeinheit (5) als Hybridbauteil ausgebildet ist und zwei Seitenteile (5a,5b), die wiederum jeweils eine Seitenwange (5c, 5d) umfassen, und Funktionselemente aufweist, und wobei die Funktionselemente Verbindungsabschnitte zum Fahrzeug oder zur Manteleinheit (3) sind, wobei das Hybridbauteil wenigstens einen Einleger (12a, 12b, 13a, 13b) aufweist, der mit Kunststoff zu dem Hybridbauteil ergänzt ist, wobei der Einleger (12a, 12b, 13a, 13b) wenigstens ein Funktionselement bildet, **dadurch gekennzeichnet,**
**dass** ein Einleger (13a, 13b) eine Seitenwange (5c, 5d) ausbildet, der ein Langloch (15a, 15b) aufweist, und/oder ein Einleger (12a, 12b) eine Ausnehmung (14) zur Aufnahme einer Schwenkachse bildet, wobei der Einleger (12a, 12b, 13a, 13b) einen Befestigungspunkt (6) zur Befestigung an dem Fahrzeug aufweist.

2. Lenksäule (1) nach Anspruch 1, **dadurch gekennzeichnet, dass** die Manteleinheit (3) der Lenksäule (1) um eine Schwenkachse gegenüber der Halteeinheit (5) schwenkbar gelagert ist und wobei die Aufnahmen der Halteeinheit (5) für die Schwenkachse durch ein oder mehrere der vorgenannten Funktionselemente gebildet sind.

3. Lenksäule (1) nach Anspruch 1 oder 2, **dadurch gekennzeichnet, dass** die Manteleinheit (3) der Lenksäule (1) gegenüber der Halteeinheit (5) verschiebbar ist und wobei Seitenwangen (5c, 5d) der Halteeinheit (5) angeordnet sind, die jeweils durch eines der vorgenannten Funktionselemente gebildet sind.

4. Lenksäule (1) nach einem der vorhergehenden Ansprüche, **dadurch gekennzeichnet, dass** die Lenksäule (1) eine Führungsklammer (4) aufweist, in der die Manteleinheit (3) gegenüber der Halteeinheit (5) verschiebbar geführt ist, wobei die Führungsklammer (4) um eine Schwenkachse gegenüber der Halteeinheit (5) schwenkbar gelagert ist und wobei die Aufnahmen der Halteeinheit (5) für die Schwenkachse und die beiden Seitenwangen (5c, 5d) zumindest teilweise durch vorgenannte Funktionselemente gebildet sind.

5. Lenksäule nach Anspruch 2, 3 oder 4, **dadurch gekennzeichnet, dass** eine Höhenverstelleinrichtung mit einem Spannapparat mit Spannbolzen vorgesehen ist, wobei durch Betätigen des Spannapparates die Manteleinheit (3) gegenüber den beiden Seitenwangen (5c,5d) der Halteeinheit (5) verspannbar ist, und wobei ein Funktionselement die Aufnahme der Halteeinheit (5) für den Spannbolzen bildet.

6. Lenksäule (1) nach Anspruch 5, **dadurch gekennzeichnet, dass** die Seitenwangen (5c,5d) der Halteeinheit (5) im Bereich des Spannapparates jeweils ein Langloch (15a,15b) für die Höhenverstelleinrichtung aufweisen, wobei ein Funktionselement die Langlöcher (15a,15b) aufweist.

7. Lenksäule (1) nach einem der vorhergehenden Ansprüche 2 bis 6, **dadurch gekennzeichnet, dass** ein Funktionselement den Bereich umfasst, in dem die Seitenwangen (5c,5d) der Halteeinheit (5) eine direkte oder indirekte reibschlüssige Verspannung mit den Seitenflächen der Manteleinheit (3) bilden.

8. Lenksäule (1) nach einem der vorhergehenden Ansprüche, **dadurch gekennzeichnet, dass** Befestigungspunkte (6) zur Befestigung der Halteeinheit (5) mit dem Kraftfahrzeug durch vorgenannte Funktionselemente gebildet sind.

9. Lenksäule (1) nach einem der vorhergehenden Ansprüche, **dadurch gekennzeichnet, dass** die Seitenteile (5a,5b) der Halteeinheit (5) als Einzelteile gefertigt sind, die mit einer Brücke (11) zu der Halteeinheit (5) verbunden sind.

10. Lenksäule (1) nach einem der vorhergehenden Ansprüche, **dadurch gekennzeichnet, dass** die Seitenteile (5a,5b) mit Einlegern (12a, 12b, 13a, 13b) im Spritzguss-Verfahren oder einem anderen Urform-Verfahren hergestellt sind.

11. Lenksäule (1) nach einem der vorhergehenden Ansprüche, **dadurch gekennzeichnet, dass** der Kunststoff mit Fasern verstärkt ist.

12. Lenksäule (1) nach einem der vorhergehenden Ansprüche, **dadurch gekennzeichnet, dass** die Einleger (12a, 12b, 13a, 13b) aus Metall hergestellt sind.

13. Lenksäule (1) nach einem der vorhergehenden Ansprüche 1 bis 9, **dadurch gekennzeichnet, dass** die Einleger (12a, 12b, 13a, 13b) aus einem anderen Kunststoff gefertigt sind.

14. Lenksäule (1) nach einem der vorhergehenden Ansprüche, **dadurch gekennzeichnet, dass** die Einleger (12a, 12b, 13a, 13b) Löcher (16) zur formschlüssigen Verbindung mit dem Kunststoff aufweisen.

15. Lenksäule nach einem der vorhergehenden Ansprüche, **dadurch gekennzeichnet, dass** die Funktionselemente eines Seitenteils (5a,5b) durch zwei Einleger (12a, 12b, 13a, 13b) gebildet sind.

## Claims

1. Steering column (1) for a motor vehicle comprising a steering spindle (2), which is rotatably mounted in a casing unit (3), and comprising a holding unit (5), which indirectly or directly surrounds the casing unit (3), for connecting the casing unit (3) to the motor vehicle, wherein the holding unit (5) is in the form of a hybrid component and comprises two side parts (5a, 5b), which in turn each comprise a side web (5c, 5d), and functional elements, and wherein the functional elements are connecting sections to the vehicle or to the casing unit (3), wherein the hybrid component comprises at least one insert (12a, 12b, 13a, 13b) to which plastic is added in order to form the hybrid component, wherein the insert (12a, 12b, 13a, 13b) forms at least one functional element, **characterized**
**in that** an insert (13a, 13b) forms a side web (5c, 5d), which insert comprises an elongate hole (15a, 15b), and/or an insert (12a, 12b) forms a recess (14) for receiving a pivot axis, wherein the insert (12a, 12b, 13a, 13b) has a fastening point (6) for fastening to the vehicle.

2. Steering column (1) according to Claim 1, **characterized in that** the casing unit (3) of the steering column (1) is mounted such that it can pivot in relation to the holding unit (5) about a pivot axis, and wherein the receptacles of the holding unit (5) for the pivot axis are formed by one or more of the abovementioned functional elements.

3. Steering column (1) according to Claim 1 or 2, **characterized in that** the casing unit (3) of the steering column (1) can be displaced in relation to the holding unit (5), and wherein side webs (5c, 5d) of the holding unit (5) which are each formed by one of the abovementioned functional elements are provided.

4. Steering column (1) according to one of the preceding claims, **characterized in that** the steering column (1) comprises a guide clip (4) in which the casing unit (3) is guided such that it can be displaced in relation to the holding unit (5), wherein the guide clip (4) is mounted such that it can pivot in relation to the holding unit (5) about a pivot axis, and wherein the receptacles of the holding unit (5) for the pivot axis and the two side webs (5c, 5d) are at least partially formed by abovementioned functional elements.

5. Steering column according to Claim 2, 3 or 4, **characterized in that** a vertical adjustment device comprising a clamping apparatus with a clamping bolt is provided, wherein the casing unit (3) can be clamped in relation to the two side webs (5c, 5d) of the holding unit (5) by operation of the clamping apparatus, and wherein a functional element forms the receptacle of the holding unit (5) for the clamping bolt.

6. Steering column (1) according to Claim 5, **characterized in that** the side webs (5c, 5d) of the holding unit (5) each comprise an elongate hole (15a, 15b) for the vertical adjustment device in the region of the clamping apparatus, wherein a functional element comprises the elongate holes (15a, 15b).

7. Steering column (1) according to one of the preceding Claims 2 to 6, **characterized in that** a functional element comprises the region in which the side webs (5c, 5d) of the holding unit (5) form a direct or indirect frictional clamping arrangement with the side surfaces of the casing unit (3).

8. Steering column (1) according to one of the preceding claims, **characterized in that** fastening points (6) for fastening the holding unit (5) to the motor vehicle are formed by abovementioned functional elements.

9. Steering column (1) according to one of the preceding claims, **characterized in that** the side parts (5a, 5b) of the holding unit (5) are produced as individual parts which are connected to a bridge (11) in order to form the holding unit (5).

10. Steering column (1) according to one of the preceding claims, **characterized in that** the side parts (5a, 5b) are produced with inserts (12a, 12b, 13a, 13b) using an injection-moulding process or another primary-forming process.

11. Steering column (1) according to one of the preceding claims, **characterized in that** the plastic is reinforced with fibres.

12. Steering column (1) according to one of the preceding claims, **characterized in that** the inserts (12a, 12b, 13a, 13b) are produced from metal.

13. Steering column (1) according to one of preceding Claims 1 to 9, **characterized in that** the inserts (12a, 12b, 13a, 13b) are produced from another plastic.

14. Steering column (1) according to one of the preceding claims, **characterized in that** the inserts (12a, 12b, 13a, 13b) comprise holes (16) for interlocking connection to the plastic.

15. Steering column according to one of the preceding claims, **characterized in that** the functional elements of a side part (5a, 5b) are formed by two inserts (12a, 12b, 13a, 13b).

## Revendications

1. Colonne de direction (1) pour un véhicule automobile, comprenant un arbre de direction (2) monté à rotation dans une unité d'enveloppe (3) et comprenant une unité de maintien (5) entourant directement ou indirectement l'unité d'enveloppe (3), servant à relier l'unité d'enveloppe (3) au véhicule automobile, l'unité de maintien (5) étant réalisée sous la forme d'un élément structural hybride et possédant deux parties latérales (5a, 5b), lesquelles comportent à leur tour respectivement un flasque latéral (5c, 5d), et des éléments fonctionnels, et les éléments fonctionnels étant des portions de liaison avec le véhicule ou avec l'unité d'enveloppe (3), l'élément structural hybride possédant au moins un élément d'introduction (12a, 12b, 13a, 13b), qui est complété avec de la matière plastique pour former l'élément structural hybride, l'élément d'introduction (12a, 12b, 13a, 13b) formant au moins un élément fonctionnel,
**caractérisée en ce**
**qu'**un élément d'introduction (13a, 13b) forme un flasque latéral (5c, 5d) qui possède un trou oblong (15a, 15b), et/ou un élément d'introduction (12a, 12b) forme une cavité (14) destinée à accueillir un axe de pivotement, l'élément d'introduction (12a, 12b, 13a, 13b) possédant un point de fixation (6) servant à la fixation au véhicule.

2. Colonne de direction (1) selon la revendication 1, **caractérisée en ce que** l'unité d'enveloppe (3) de la colonne de direction (1) est montée pivotante autour d'un axe de pivotement par rapport à l'unité de maintien (5) et les logements de l'unité de maintien (5) pour l'axe de pivotement sont formés par un ou plusieurs des éléments fonctionnels mentionnés précédemment.

3. Colonne de direction (1) selon la revendication 1 ou 2, **caractérisée en ce que** l'unité d'enveloppe (3) de la colonne de direction (1) peut coulisser par rapport à l'unité de maintien (5) et des flasques latéraux (5c, 5d) de l'unité de maintien (5) sont arrangés, lesquels sont respectivement formés par l'un des éléments fonctionnels mentionnés précédemment.

4. Colonne de direction (1) selon l'une des revendications précédentes, **caractérisée en ce que** la colonne de direction (1) possède une bride de guidage (4) dans laquelle l'unité d'enveloppe (3) est guidée de manière coulissante par rapport à l'unité de maintien (5), la bride de guidage (4) étant montée à rotation par rapport à l'unité de maintien (5) autour d'un axe de pivotement et les logements de l'unité de maintien (5) pour l'axe de pivotement et les deux flasques latéraux (5c, 5d) étant formés au moins partiellement par les éléments fonctionnels mentionnés précédemment.

5. Colonne de direction selon la revendication 2, 3 ou 4, **caractérisée en ce qu'**un dispositif de réglage en hauteur comprenant un appareil de serrage pourvu de boulons de serrage est présent, l'unité d'enveloppe (3) pouvant être serrée contre les deux flasques latéraux (5c, 5d) de l'unité de maintien (5) en actionnant l'appareil de serrage, et un élément fonctionnel formant le logement de l'unité de maintien (5) pour les boulons de serrage.

6. Colonne de direction (1) selon la revendication 5, **caractérisée en ce que** les flasques latéraux (5c, 5d) de l'unité de maintien (5) possèdent respectivement un trou oblong (15a, 15b) pour le dispositif de réglage en hauteur dans la zone de l'appareil de serrage, un élément fonctionnel possédant les trous oblongs (15a, 15b).

7. Colonne de direction (1) selon l'une des revendications 2 à 6, **caractérisée en ce qu'**un élément fonctionnel comporte la zone dans laquelle les flasques latéraux (5c, 5d) de l'unité de maintien (5) forment un serrage avec friction direct ou indirect avec les surfaces latérales de l'unité d'enveloppe (3).

8. Colonne de direction (1) selon l'une des revendications précédentes, **caractérisée en ce que** des points de fixation (6) destinés à la fixation de l'unité de maintien (5) avec le véhicule automobile sont formés par les éléments fonctionnels mentionnés précédemment.

9. Colonne de direction (1) selon l'une des revendications précédentes, **caractérisée en ce que** les parties latérales (5a, 5b) de l'unité de maintien (5) sont réalisées sous la forme de parties individuelles qui sont reliées à l'unité de maintien (5) par un cavalier (11) .

10. Colonne de direction (1) selon l'une des revendications précédentes, **caractérisée en ce que** les parties latérales (5a, 5b) avec les éléments d'introduction (12a, 12b, 13a, 13b) sont fabriquées dans un procédé de moulage par injection ou un autre procédé de façonnage.

11. Colonne de direction (1) selon l'une des revendications précédentes, **caractérisée en ce que** la matière plastique est renforcée par des fibres.

12. Colonne de direction (1) selon l'une des revendications précédentes, **caractérisée en ce que** les éléments d'introduction (12a, 12b, 13a, 13b) sont fabriqués en métal.

13. Colonne de direction (1) selon l'une des revendications précédentes 1 à 9, **caractérisée en ce que** les éléments d'introduction (12a, 12b, 13a, 13b) sont fabriqués en une autre matière plastique.

14. Colonne de direction (1) selon l'une des revendications précédentes, **caractérisée en ce que** les éléments d'introduction (12a, 12b, 13a, 13b) possèdent des trous (16) servant l'assemblage par complémentarité de formes avec la matière plastique.

15. Colonne de direction (1) selon l'une des revendications précédentes, **caractérisée en ce que** les éléments fonctionnels d'une partie latérale (5a, 5b) sont formés par deux éléments d'introduction (12a, 12b, 13a, 13b) .
